(19) Europäisches Patentamt
European Patent Office
Office européen des brevets

(11) **EP 1 036 115 B1**

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(21) Anmeldenummer: **98963491.0**

(22) Anmeldetag: **21.11.1998**

(51) Int Cl.[7]: **C09B 67/40**, C09D 11/00

(86) Internationale Anmeldenummer:
**PCT/EP98/07499**

(87) Internationale Veröffentlichungsnummer:
**WO 99/29783 (17.06.1999 Gazette 1999/24)**

(54) **FARBSTOFFZUBEREITUNGEN, ENTHALTEND AZOFARBSTOFFE**

DYE PREPARATIONS CONTAINING AZO DYES

PREPARATIONS DE COLORANTS CONTENANT DES COLORANTS AZO

(84) Benannte Vertragsstaaten:
**CH DE FR GB IT LI**

(30) Priorität: **05.12.1997 DE 19754025**

(43) Veröffentlichungstag der Anmeldung:
**20.09.2000 Patentblatt 2000/38**

(73) Patentinhaber: **BASF AKTIENGESELLSCHAFT**
**67056 Ludwigshafen (DE)**

(72) Erfinder:
- **SIEMENSMEYER, Karl**
  **D-67227 Frankenthal (DE)**
- **SIEGEL, Bernd**
  **D-67166 Otterstadt (DE)**
- **BACH, Volker**
  **D-67434 Neustadt (DE)**
- **HERRMANN, Manfred**
  **D-67061 Ludwigshafen (DE)**
- **KÖNIG, Günther**
  **D-67133 Maxdorf (DE)**
- **SENS, Rüdiger**
  **D-67069 Ludwigshafen (DE)**

(56) Entgegenhaltungen:

| | |
|---|---|
| **EP-A- 0 037 798** | **EP-A- 0 328 485** |
| **EP-A- 0 625 552** | **EP-A- 0 655 527** |
| **EP-A- 0 735 109** | **DE-A- 2 724 951** |
| **DE-A- 2 940 292** | **DE-A- 3 641 677** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 036 115 B1

## Beschreibung

Die vorliegende Erfindung betrifft neue Farbstoffzubereitungen, enthaltend, jeweils bezogen auf das Gewicht der Zubereitung, 0,1 bis 30 Gew.-% eines oder mehrerer Farbstoffe aus der Klasse der Mono- oder Polyazofarbstoffe, die keine sauren Gruppen aufweisen, 0,1 bis 20 Gew.-% eines Dispergiermittels auf Basis eines Arylsulfonsäure-Formaldehyd-Kondensationsprodukts, das einen Gehalt von 3 bis 50 Gew.-%, bezogen auf das Gewicht des Dispergiermittels, einer oder mehrerer aromatischer oder langkettiger aliphatischer Carbonsäuren, deren Salze, deren Anhydride oder einer Mischung hieraus aufweist, oder 0,1 bis 20 Gew.-% eines wasserlöslichen Dispergiermittels auf Basis von oxalkylierten Phenolen und gegebenenfalls Wasser, sowie ihre Verwendung als Tinten im Ink-Jet-Verfahren und für den textilen Sublimations-Transferdruck.

Aus der EP-A-655 527 sind bereits Farbstoffzubereitungen, enthaltend Dispersionsfarbstoffe und spezielle Dispergiermittel, bekannt.

Die EP-A- 0 328 485 beschreibt Farbstoffpräparationen, die einen in Wasser schwer- bis unlöslichen Farbstoff, ein oder mehrere Dispergiermittel und ein Alkylendiamid enthalten.

Die EP-A-0 625 552 beschreibt Präparationen, die neben anderen Farbstoffen auch wasserunlösliche Azofarbstoffe enthalten. Oxalkylierte Phenole werden als Dispergiermittel verwendet.

Die DE-A-2 724 951 beschreibt ebenfalls Präparationen mit wasserunlöslichen Azofarbstoffen, die auch oxalkylierte Phenole als Dispergiermittel enthalten können.

Aufgabe der vorliegenden Erfindung war es, neue Farbstoffzubereitungen, enthaltend Mono- oder Polyazofarbstoffe, bereitzustellen. Die neuen Farbstoffzubereitungen sollten sich vorteilhaft für die Anwendung im Ink-Jet-Verfahren sowie beim textilen Sublimations-Transferdruck eignen.

Demgemäß wurden die eingangs näher bezeichneten Farbstoffzubereitungen gefunden.

Geeignete Mono- oder Polyazofarbstoffe sind an sich bekannt und in großer Zahl beschrieben, z.B. in K. Venkataraman "The Chemistry of Synthetic Dyes", Vol. VI, Academic Press, New York, London, 1972.

Von besonderer Bedeutung sind Azofarbstoffe, insbesondere Monoazofarbstoffe, mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

Wichtige Monoazofarbstoffe sind beispielsweise solche, deren Diazokomponente sich z.B. von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol-, Benzthiazol-, Benzisothiazol-, Pyridothiophen-, Pyrimidothiophen-, Thienothiophen- oder Thienothiazolreihe ableitet.

Besonders zu nennen sind solche Diazokomponenten, die von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen-, Thienothiophen- oder Thienothiazolreihe stammen.

Von Bedeutung sind weiterhin Azofarbstoffe, insbesondere Monoazofarbstoffe, mit einer Kupplungskomponente aus der Anilin-, Aminonaphthalin-, Aminothiazol-, Diaminopyridin- oder Hydroxypyridonreihe.

Von besonderer Bedeutung sind Monoazofarbstoffe der Formel I

$$D\text{-}N{=}N\text{-}K \qquad (I),$$

in der

D für einen Rest der Formel

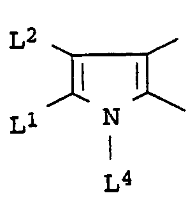
(IIa)

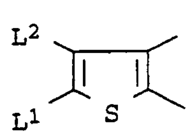
(IIb)

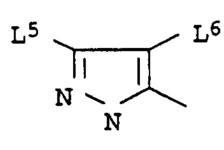
(IIc)

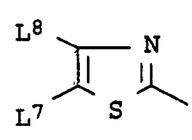
(IId)

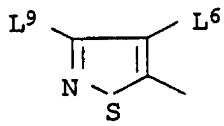

(IIe)

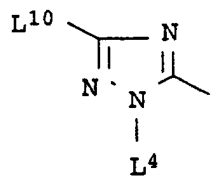

(IIf)

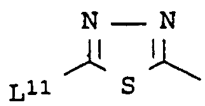

(IIg)

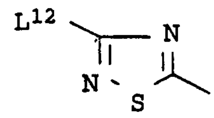

(IIh)

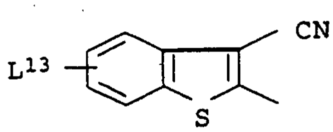

(IIi)

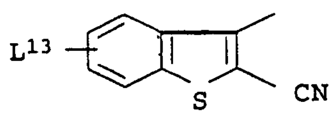

(IIj)

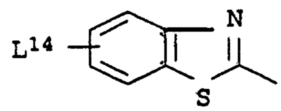

(IIk)

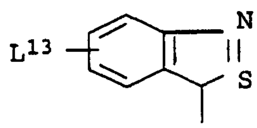

(IIl)

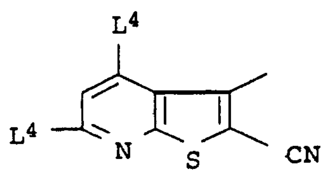

(IIm)

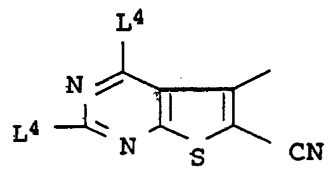

(IIn)

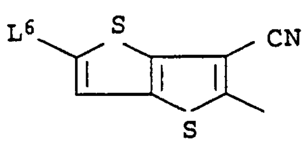

(IIo)

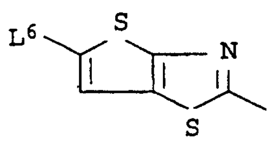

(IIp)

oder

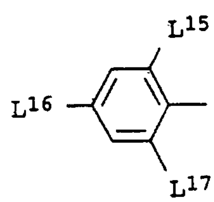

(IIq)

und

K für einen Rest der Formel

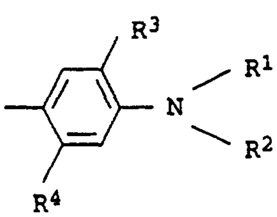

(IIIa)

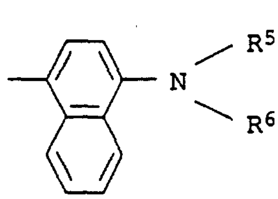

(IIIb)

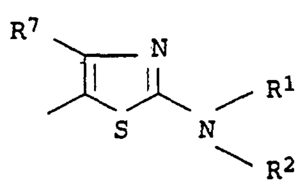

(IIIc)

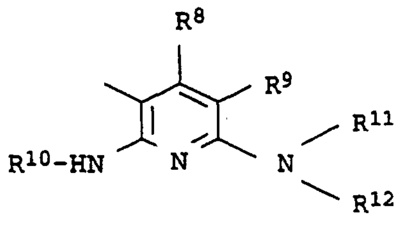

(IIId)

oder

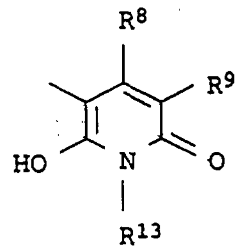

(IIId)

stehen, worin

$L^1$ Nitro, Cyano, $C_1$-$C_6$-Alkanoyl, Benzoyl, $C_1$-$C_6$-Alkylsulfonyl, gegebenenfalls substituiertes Phenylsulfonyl oder einen Rest der Formel -CH=T, worin T die Bedeutung von Hydroxyimino, $C_1$-$C_4$-Alkoxyimino oder eines Restes einer CH-aciden Verbindung besitzt,

$L^2$ Wasserstoff, $C_1$-$C_6$-Alkyl, Halogen, Hydroxy, Mercapto, gegebenenfalls durch Phenyl oder $C_1$-$C_4$-Alkoxy substituiertes $C_1$-$C_6$-Alkoxy, gegebenenfalls substituiertes Phenoxy, gegebenenfalls durch Phenyl substituiertes $C_1$-$C_6$-Alkylthio, gegebenenfalls substituiertes Phenylthio, $C_1$-$C_6$-Alkylsulfonyl oder gegebenenfalls substituiertes Phenylsulfonyl,

$L^3$ Cyano, $C_1$-$C_4$-Alkoxycarbonyl oder Nitro,

$L^4$ Wasserstoff, $C_1$-$C_6$-Alkyl oder Phenyl,

$L^5$ $C_1$-$C_6$-Alkyl oder Phenyl,

$L^6$ Wasserstoff, Cyano, $C_1$-$C_4$-Alkoxycarbonyl, $C_1$-$C_6$-Alkanoyl, Thiocyanato oder Halogen,

$L^7$ Nitro, Cyano, $C_1$-$C_6$-Alkanoyl, Benzoyl, $C_1$-$C_4$-Alkoxycarbonyl, $C_1$-$C_6$-Alkylsulfonyl, gegebenenfalls substituiertes Phenylsulfonyl oder einen Rest der Formel -CH=T, worin T die obengenannte Bedeutung besitzt,

$L^8$ Wasserstoff, $C_1$-$C_6$-Alkyl, Cyano, Halogen, gegebenenfalls durch Phenyl oder $C_1$-$C_4$-Alkoxy substituiertes $C_1$-$C_6$-Alkoxy, gegebenenfalls durch Phenyl substituiertes $C_1$-$C_6$-Alkylthio, gegebenenfalls substituiertes Phenylthio, $C_1$-$C_6$-Alkylsulfonyl, gegebenenfalls substituiertes Phenylsulfonyl oder $C_1$-$C_4$-Alkoxycarbonyl,

$L^9$ Cyano, gegebenenfalls durch Phenyl substituiertes $C_1$-$C_6$-Alkyl, gegebenenfalls durch Phenyl substituiertes $C_1$-$C_6$-Alkylthio, gegebenenfalls substituiertes Phenyl, Thienyl, $C_1$-$C_4$-Alkylthienyl, Pyridyl oder $C_1$-$C_4$-Alkylpyridyl,

$L^{10}$ Phenyl oder Pyridyl,

$L^{11}$ Trifluormethyl, Nitro, $C_1$-$C_6$-Alkyl, Phenyl, gegebenenfalls durch Phenyl substituiertes $C_1$-$C_6$-Alkylthio oder $C_1$-$C_6$-Dialkylamino.

$L^{12}$ $C_1$-$C_6$-Alkyl, Phenyl, 2-Cyanoethylthio oder 2-($C_1$-$C_4$-Alkoxycarbonyl)ethylthio,

$L^{13}$ Wasserstoff, Nitro oder Halogen,

$L^{14}$ Wasserstoff, Cyano, $C_1$-$C_4$-Alkoxycarbonyl, Nitro oder Halogen,

$L^{15}$, $L^{16}$ und $L^{17}$ gleich oder verschieden sind und unabhängig voneinander jeweils Wasserstoff, $C_1$-$C_6$-Alkyl, $C_1$-$C_6$-Alkoxy, Halogen, Nitro, Cyano, $C_1$-$C_4$-Alkoxycarbonyl, $C_1$-$C_6$-Alkylsulfonyl oder gegebe-

nenfalls substituiertes Phenylsulfonyl,

$R^1$ und $R^2$ gleich oder verschieden sind und unabhängig voneinander jeweils Wasserstoff, gegebenenfalls substituiertes $C_1$-$C_6$-Alkyl, das durch 1 oder 2 Sauerstoffatome in Etherfunktion unterbrochen sein kann, $C_5$-$C_7$-Cycloalkyl oder $C_3$-$C_6$-Alkenyl,

$R^3$ Wasserstoff, $C_1$-$C_6$-Alkyl oder $C_1$-$C_6$-Alkoxy,

$R^4$ Wasserstoff, $C_1$-$C_6$-Alkyl, $C_1$-$C_6$-Alkoxy, $C_1$-$C_6$-Alkylsulfonylamino, gegebenenfalls substituiertes $C_1$-$C_6$-Alkanoylamino oder Benzoylamino,

$R^5$ und $R^6$ gleich oder verschieden sind und unabhängig voneinander jeweils Wasserstoff oder $C_1$-$C_6$-Alkyl,

$R^7$ Wasserstoff, gegebenenfalls substituiertes Phenyl oder Thienyl,

$R^8$ Wasserstoff oder $C_1$-$C_6$-Alkyl,

$R^9$ Cyano, Carbamoyl oder Acetyl,

$R^{10}$, $R^{11}$ und $R^{12}$ gleich oder verschieden sind und unabhängig voneinander jeweils gegebenenfalls substituiertes $C_1$-$C_{12}$-Alkyl, das durch 1 bis 3 Sauerstoffatome in Etherfunktion unterbrochen sein kann, $C_5$-$C_7$-Cycloalkyl, gegebenenfalls substituiertes Phenyl, $C_3$-$C_6$-Alkenyl, gegebenenfalls substituiertes Benzoyl, $C_1$-$C_8$-Alkanoyl, $C_1$-$C_6$-Alkylsulfonyl oder gegebenenfalls substituiertes Phenylsulfonyl oder $R^{11}$ und $R^{12}$ zusammen mit dem sie verbindenden Stickstoffatom einen 5- oder 6-gliedrigen gesättigten heterocyclischen Rest, der gegebenenfalls weitere Heteroatome enthält, und

$R^{13}$ Wasserstoff oder $C_1$-$C_6$-Alkyl bedeuten.

Von besonderer Bedeutung sind auch Disazofarbstoffe der Formel IVa oder IVb

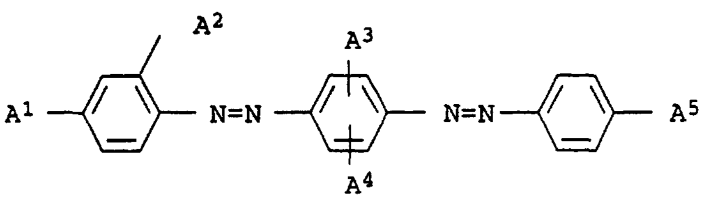

(IVa),

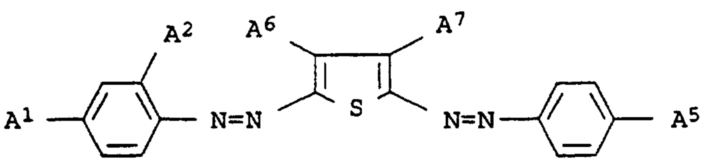

(IVb),

in der

$A^1$ Wasserstoff, $C_1$-$C_6$-Alkyl, $C_1$-$C_6$-Alkoxy oder Nitro,

A2 Wasserstoff oder Cyano

$A^3$ und $A^4$ gleich oder verschieden sind und unabhängig voneinander jeweils Wasserstoff, $C_1$-$C_6$-Alkyl oder $C_1$-$C_6$-Alkoxy,

$A^5$ Wasserstoff, Hydroxy, $C_1$-$C_6$-Alkoxy, Amino oder gegebenenfalls durch Cyano substituiertes $C_1$-$C_6$-Mono- oder Dialkylamino,

$A^6$ Wasserstoff, Methyl oder Chlor und

$A^7$ Cyano oder $C_1$-$C_4$-Alkoxycarbonyl bedeuten.

Alle in den obengenannten Formeln auftretenden Alkyl- oder Alkenylgruppen können sowohl geradkettig als auch verzweigt sein.

Wenn in den obengenannten Formeln substituierte Phenylgruppen auftreten, können als Substituenten z.B. $C_1$-$C_4$-Alkyl, Chlor, Brom, Nitro oder $C_1$-$C_4$-Alkoxy in Betracht kommen. Die Phenylreste weisen dabei in der Regel 1 bis 3 Substituenten auf.

Wenn in den obengenannten Formeln substituierte Alkylgruppen auftreten, können als Substituenten, sofern nicht anders vermerkt, z.B. Hydroxy, Cyclohexyloxy, Phenoxy, $C_1$-$C_4$-Alkoxycarbonyl, $C_1$-$C_4$-Alkanoyloxy, Cyano, Cyclohexyl oder Phenyl in Betracht kommen. Die Alkylreste weisen dabei in der Regel 1 oder 2 Substituenten auf.

Reste $L^2$, $L^4$, $L^5$, $L^8$, $L^9$, $L^{11}$, $L^{12}$, $L^{15}$, $L^{16}$, $L^{17}$, $R^1$, $R^2$, $R^3$, $R^4$, $R^5$, $R^6$, $R^8$, $R^{10}$, $R^{11}$, $R^{12}$, $R^{13}$, $A^1$, $A^3$ und $A^4$ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste $L^9$ sind weiterhin z.B. Benzyl oder 1- oder 2-Phenylethyl.

Reste $L^2$, $L^8$, $L^9$ und $L^{11}$ sind weiterhin z.B. Methylthio, Ethylthio, Propylthio, Isopropylthio, Butylthio, Isobutylthio, Pentylthio, Hexylthio, Benzylthio oder 1- oder 2-Phenylethylthio.

Reste $L^2$ und $L^8$ sind weiterhin z.B. Phenylthio, 2-Methylphenylthio, 2-Methoxyphenylthio oder 2-Chlorphenylthio.

Reste $A^5$ sind, wie weiterhin auch Reste $L^2$, $L^8$, $L^{15}$, $L^{16}$, $L^{17}$, $R^3$, $R^4$, $A^1$, $A^3$ und $A^4$, z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste $L^6$ sind, wie weiterhin auch Reste $L^2$, $L^8$, $L^{13}$, $L^{14}$, $L^{15}$, $L^{16}$ und $L^{17}$, z.B. Fluor, Chlor oder Brom.

Reste $L^7$ sind, wie weiterhin auch Reste $L^1$, $L^2$, $L^8$, $L^{15}$, $L^{16}$, $L^{17}$, $R^{10}$, $R^{11}$ und $R^{12}$, z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Reste $L^3$ und $A^7$ sind, wie weiterhin auch Reste $L^6$, $L^7$, $L^8$, $L^{14}$, $L^{15}$, $L^{16}$ und $L^{17}$, z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste $L^2$ und $L^8$ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste $A^5$ sind weiterhin z.B. Methylamino, Ethylamino, Propylamino, Isopropylamino, Butylamino, Pentylamino, Hexylamino, 2-Cyanoethylamino oder Bis(2-cyanoethyl)amino.

Reste $L^{11}$ und $A^5$ sind weiterhin z.B. Dimethylamino, Diethylamino, Dipropylamino, Diisopropylamino, Dibutylamino, Dipentylamino, Dihexylamino oder N-Methyl-N-ethylamino.

Reste $L^{12}$ sind weiterhin z.B. 2-Methoxycarbonylethylthio oder 2-Ethoxycarbonylethylthio.

Reste $R^1$, $R^2$, $R^{11}$, $R^{12}$ und $R^{13}$ sind weiterhin z.B. Cyclopentyl, Cyclohexyl oder Cycloheptyl.

Reste $L^9$ sind weiterhin z.B. Phenyl, 2-, 3- oder 4-Methylphenyl, 2,4-Dimethylphenyl, 2-, 3- oder 4-Methoxyphenyl, 2-, 3- oder 4-Chlorphenyl, 2-, 3- oder 4-Methoxyphenyl, 2- oder 3-Methylthienyl oder 2-, 3- oder 4-Methylpyridyl.

Reste $L^1$, $L^6$ und $L^7$ sind weiterhin z.B. Formyl, Acetyl, Propionyl, Butyryl, Pentanoyl oder Hexanoyl.

Wenn $L^1$ oder $L^7$ für den Rest -CH=T stehen, worin T sich von einer CH-aciden Verbindung $H_2T$ ableitet, können als CH-acide Verbindungen $H_2T$ z.B. Verbindungen der Formel

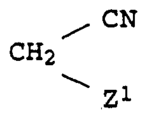
(Va)
,
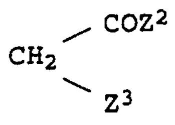
(Vb)
,
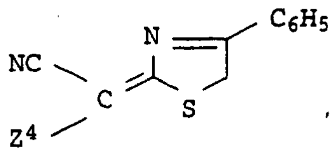
(Vc)
,
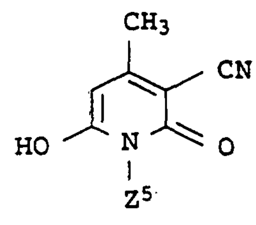
(Vd)
,

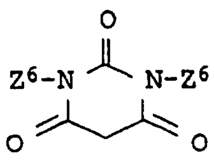 , 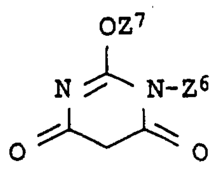 oder 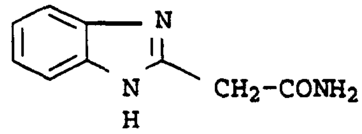

(Ve) (Vf) (Vg)

in Betracht kommen, wobei

- $Z^1$ Cyano, Nitro, $C_1$-$C_4$-Alkanoyl, gegebenenfalls substituiertes Benzoyl, $C_1$-$C_4$-Alkylsulfonyl, gegebenenfalls substituiertes Phenylsulfonyl, Carboxyl, $C_1$-$C_4$-Alkoxycarbonyl, $C_3$-$C_4$-Alkenyloxycarbonyl, Phenoxycarbonyl, Carbamoyl, $C_1$-$C_4$-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- $Z^2$ $C_1$-$C_4$-Alkyl, $C_1$-$C_4$-Alkoxy oder $C_3$-$C_4$-Alkenyloxy,
- $Z^3$ $C_1$-$C_4$-Alkoxycarbonyl, $C_3$-$C_4$-Alkenyloxycarbonyl, Phenylcarbamoyl oder Benzimidazol-2-yl,
- $Z^4$ Cyano, $C_1$-$C_4$-Alkoxycarbonyl oder $C_3$-$C_4$-Alkenyloxycarbonyl,
- $Z^5$ Wasserstoff oder $C_1$-$C_6$-Alkyl,
- $Z^6$ Wasserstoff, $C_1$-$C_4$-Alkyl oder Phenyl und
- $Z^7$ $C_1$-$C_4$-Alkyl bedeuten.

Dabei ist der Rest der sich von Verbindungen der Formel Va, Vb oder Vc ableitet, worin $Z^1$ Cyano, $C_1$-$C_4$-Alkanoyl, $C_1$-$C_4$-Alkoxycarbonyl oder $C_3$-$C_4$-Alkenyloxycarbonyl, $Z^2$ $C_1$-$C_4$-Alkyl, $C_1$-$C_4$-Alkoxy oder $C_3$-$C_4$-Alkenyloxy, $Z^3$ $C_1$-$C_4$-Alkoxycarbonyl oder $C_3$-$C_4$-Alkenyloxycarbonyl und $Z^4$ Cyano bedeuten, hervorzuheben.

Besonders hervorzuheben ist dabei der Rest der sich von Verbindungen der Formel Va, Vb oder Vc ableitet, worin $Z^1$ Cyano, $C_1$-$C_4$-Alkoxycarbonyl oder $C_3$-$C_4$-Alkenyloxycarbonyl, $Z^2$ $C_1$-$C_4$-Alkoxy oder $C_2$-$C_4$-Alkenyloxy, $Z^3$ $C_1$-$C_4$-Alkoxycarbonyl oder $C_3$-$C_4$-Alkenyloxycarbonyl und $Z^4$ Cyano bedeuten.

Reste $R^{10}$, $R^{11}$ und $R^{12}$ sind weiterhin z.B. Heptyl, Octyl, 2-Ethylhexyl, Nonyl, Decyl, Undecyl, Dodecyl, 4,7-Dioxanonyl, 4,B-Dioxadecyl, 4,6-Dioxaundecyl, 3,6,9-Trioxaundecyl, 4,7,10-Trioxaundecyl oder 4,7,10-Trioxadodecyl.

Reste $R^1$, $R^2$, $R^{10}$, $R^{11}$ und $R^{12}$ sind weiterhin z.B. 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl, 3,6-Dioxaheptyl, 3,6-Dioxaoctyl, 4,7-Dioxaoctyl, 2-Hydroxyethyl, 3-Hydroxypropyl, 4-Hydroxybutyl, 2-Cyclohexyloxyethyl, 2- oder 3-Cyclohexyloxypropyl, 2- oder 4-Cyclohexyloxybutyl, 2-Phenoxyethyl, 2-Phenoxypropyl, 3-Phenoxypropyl, 4-Phenoxybutyl, 2-Methoxycarbonylethyl, 2-Ethoxycarbonylethyl, 2- oder 3-Methoxycarbonylpropyl, 2- oder 3-Ethoxycarbonylpropyl, 2- oder 3-Butoxycarbonylpropyl, 4-Methoxycarbonylbutyl, 4-Ethoxycarbonylbutyl, 2-Cyanoethyl, 2- oder 3-Cyanopropyl, 4-Cyanobutyl, 2-Cyclohexylalkyl, 2- oder 3-Cyclohexylpropyl, Benzyl, 1- oder 2-Phenylethyl, 2-Acetyloxyethyl, 2-Propionyloxyethyl, 2- oder 3-Acetyloxypropyl, Prop-2-en-1-yl, 2-Methyl-prop-2-en-1-yl, But-2-en-1-yl oder But-3-en-1-yl.

Wenn die Reste $R^{11}$ und $R^{12}$ zusammen mit dem sie verbindenden Stickstoffatom einen fünf- oder sechsgliedrigen gesättigten heterocyclischen Rest, der gegebenenfalls weitere Heteroatome enthält, bedeuten, so kommen dafür z.B. Pyrrolidinyl, Piperidinyl, Morpholinyl, Thiomorpholinyl, Thiomorpholinyl-S,S-dioxid, Piperazinyl oder N-($C_1$-$C_4$-Alkyl)piperazinyl, wie N-Methyl- oder N-Ethylpiperazinyl, in Betracht.

Reste $R^{10}$, $R^{11}$ und $R^{12}$ sind weiterhin z.B. Formyl, Acetyl, Propionyl, Butyryl, Isobutyryl, Pentanoyl, Hexanoyl, Heptanoyl, Octanoyl, 2-Ethylhexanoyl, Benzoyl, 2-, 3- oder 4-Methylbenzoyl, 2-, 3- oder 4-Methoxybenzoyl oder 2-, 3- oder 4-Chlorbenzoyl.

Von besonderem Interesse sind Monoazofarbstoffe der Formel I, in der D einen Rest der Formel IIq und K einen Rest der Formel IIIa bedeuten.

Besonders bevorzugt sind Azofarbstoffe der Formel VI

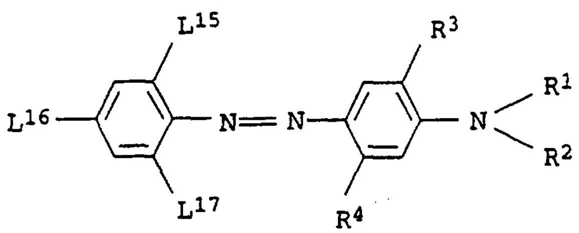

(VI),

in der

| | |
|---|---|
| $L^{15}$ und $L^{17}$ | jeweils Cyano, |
| $L^{16}$ | $C_1$-$C_6$-Alkyl, |
| $R^1$ und $R^2$ | jeweils $C_1$-$C_6$-Alkyl, |
| R3 | Wasserstoff $C_1$-$C_6$-Alkyl oder $C_1$-$C_6$-Alkoxy und |
| R4 | Wasserstoff, $C_1$-$C_6$-Alkyl oder $C_1$-$C_6$-Alkanoylamino bedeuten. |

Wie eingangs schon erwähnt, sind die Azofarbstoffe an sich bekannt und z.B. in Venkataraman (loc. cit.), in der EP-A-201 896, DE-A-3 108 077, US-A-4 843 153, GB-A-1 546 803, EP-A-535 490 oder EP-A-544 153 beschrieben oder können nach den dort genannten Methoden erhalten werden.

Bevorzugt sind Farbstoffzubereitungen, in denen 99 % der in der Zubereitung enthaltenen Farbstoffteilchen kleiner sind als 1 µm.

Man verwendet als Dispergiermittel ein Arylsulfonsäure-Formaldehyd-Kondensationsprodukt, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist.

Als Arylsulfonsäure-Formaldehyd-Kondensate werden vor allem solche mit einem maximalen Gehalt an Sulfonsäuregruppen von 40 Gew.-% verwendet.

Als Ausgangsprodukt für die Arylsulfonsäuren kommt insbesondere ein Gemisch solcher aromatischer Verbindungen in Betracht, die durch thermische Spaltung eines naphthenischen Rückstandsöls und Fraktionieren der Spaltprodukte erhältlich sind. Die naphthenischen Rückstandsöle fallen beispielsweise beim Cracken von Leichtbenzin an. Sie werden z.B. in der DE-A-2 947 005 als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial Chemistry, VCH Verlagsgesellschaft mbH, Weinheim, 1985, Volume A1, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30-55 |
| 2-Methylnaphthalin | 5-15 |
| 1-Methylnaphthalin | 4-10 |
| Inden | 3-10 |
| Diphenyl | 1- 5 |
| Methylinden | 1- 5 |
| Acenaphthen | 1- 4 |

Die Aromatenfraktion enthält außerdem an identifizierten Bestandteilen in Mengen von 0,1 bis etwa 2 Gew. % folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acenaphthylen und Toluol.

Besonders geeignete Arylsulfonsäuren enthalten in der Regel α- und β-Naphthalinsulfonsäuren, wobei das Verhältnis der α- zu den β-Isomeren 20:1 bis 1:8, insbesondere 10:1 bis 1:5 beträgt.

Geeignete aromatische Carbonsäuren oder deren Derivate sind beispielsweise Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride, wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure, oder synthetisch hergestellte Carbonsäuren wie 2-Ethylhexansäure, Isononansäure oder Isotridecansäure.

Weiterhin sind auch Mischungen von Anhydriden, Mischungen von Carbonsäuren, Mischungen von Salzen der in Betracht kommenden Carbonsäuren sowie Mischungen von Carbonsäuren und Anhydriden von Interesse. Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen, wie Ethanolamin, Diethanolamin oder Triethanolamin, erhältlich sind.

Besonders bevorzugt werden Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure in den Dispergiermitteln verwendet.

In den erfindungsgemäßen Farbstoffzubereitungen kommen vorzugsweise solche Dispergiermittel zur Anwendung, die

A) 50 bis 97 Gew.-%, insbesondere 70 bis 95 Gew.-%, einer oder mehrerer Arylsulfonsäure-Formaldehyd-Kondensate und

B) 3 bis 50 Gew.-%, insbesondere 5 bis 30 Gew.-%, einer oder mehrerer aromatischen oder langkettigen aliphatischen Carbonsäuren, deren Salzen oder deren Anhydriden oder einer Mischung hieraus enthalten.

Bei den erfindungsgemäß als Dispergiermittel zur Anwendung gelangenden Arylsulfonsäure-Formaldehyd-Kondensationsprodukten handelt es sich um an sich bekannte Produkte. Sie sind z.B. in der US-A-5 186 846 beschrieben.

Vorzugsweise verwendet man als wasserlösliche Dispergiermittel auf Basis von oxalkylierten Phenolen, solche der Formel VII oder VIII

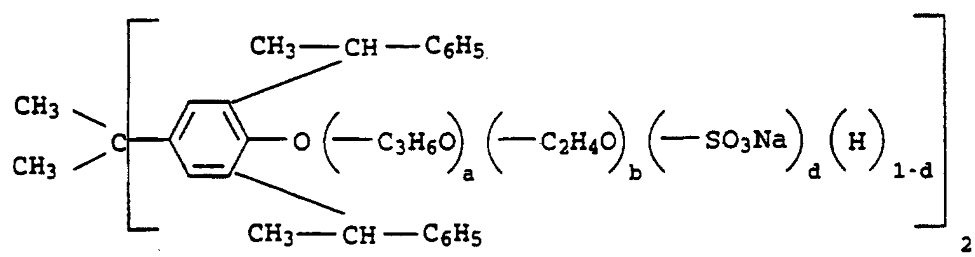

(VII)

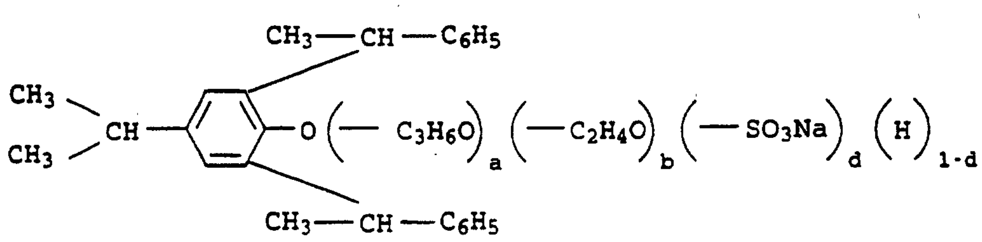

(VIII),

worin

a 0 bis im Mittel 125,

b im Mittel 37 bis 250, wobei im Falle b>37, das Verhältnis b:a mindestens 1:1 ist, und

d 0 oder 1 bedeuten, oder deren Gemische

Die Produkte der Formel VII und VIII werden durch Umsetzen der Phenolderivate der Formel IX oder X

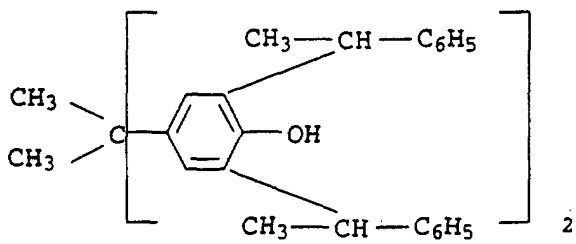

(IX)

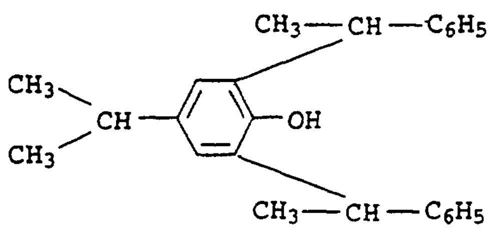

(X)

mit Propylenoxid und folgender Umsetzung des Adduktes mit Ethylenoxid oder durch Umsetzen von IX und/oder X mit Ethylenoxid erhalten. Gegebenenfalls werden die Addukte mit Chlorsulfonsäure oder Schwefeltrioxid vollständig oder partiell zu Schwefelsäurehalbester umgesetzt und die erhaltenen Halbester mit alkalisch wirkenden Mitteln neutral gestellt.

Die Phenole der Formel IX und X werden durch Umsetzen von Phenol oder 2,2-(p,p'-Bishydroxydiphenyl) propan mit 3 oder 4 Mol Styrol in Gegenwart von Säure als Katalysator erhalten. Die Phenole IX und X werden nach bekannten Verfahren zuerst mit Ethylenoxid oder nur mit Ethylenoxid in Gegenwart von sauer oder alkalisch wirkenden

Katalysatoren zu den entsprechenden Oxalkylierungsprodukten VII und VIII mit d=O umgesetzt. Die Oxalkylierung kann z.B. nach dem in der US-A-2 979 528 beschriebenen Verfahren erfolgen. Für den Fall, daß b > 37 ist, muß der Quotient

$$\frac{b}{a} > 1 \text{ sein.}$$

Die Schwefelsäurehalbester werden durch Reaktion der Oxalkylierungsprodukte mit Chlorsulfonsäure oder Schwefeltrioxid hergestellt, wobei die Menge so gewählt werden kann, daß alle freien Hydroxygruppen oder nur ein Teil sulfatiert wird. Im letzteren Falle entstehen Gemische aus Verbindungen der Formel VII und VIII, die freie und sulfatierte Hydroxygruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze. z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäßigerweise wäßriges Alkalimetallhydroxid. Bei der Neutralisation sollte die Temperatur 70°C nicht überschreiten. Die erhaltenen Salze können in Form von wäßrigen Lösungen oder auch als solche isoliert und in fester Form verwendet werden.

Bevorzugt sind Farbstoffzubereitungen mit Dispergiermitteln, worin a 0 bis im Mittel 2,5,b im Mittel 37 bis 250 und d 0 bis im Mittel 0,5 ist. Ganz besonders bevorzugt sind Zubereitungen mit Mitteln, in denen a 0 bis im Mittel 2,5, b im Mittel 50 bis 100 und d im Mittel 0,5 ist.

Bei den obengenannten Dispergiermitteln handelt es sich um an sich bekannte Verbindungen. Sie sind z.B. aus der US-A-4 218 218 bekannt.

Bevorzugt sind Farbstoffzubereitungen, die jeweils bezogen auf das Gewicht der Zubereitung 1 bis 15 Gew.-% eines oder mehrerer Azofarbstoffe, und 0,5 bis 10 Gew.-% Dispergiermittel enthalten.

Weiterhin bevorzugt sind Farbstoffzubereitungen, die zusätzlich, jeweils bezogen auf das Gewicht der Zubereitung, 0,1 bis 30 Gew.-%, vorzugsweise 0,1 bis 25 Gew.-%, eines Kohlenhydrats und 0,1 bis 20 Gew.-%, vorzugsweise 0,1 bis 15 Gew.-%, eines Polyalkylenglykols enthalten.

Geeignete Kohlenhydrate, die in den erfindungsgemäßen Farbstoffzubereitungen enthalten sein können, sind z.B. Sorbit oder Glucose.

Geeignete Polyalkylenglykole, die in den erfindungsgemäßen Farbstoffzubereitungen enthalten sein können, sind insbesondere Polyethylen- oder Polypropylenglykole, die beispielsweise ein mittleres Molekulargewicht von 100 bis 1000, vorzugsweise 100 bis 600 und insbesondere ca. 400 aufweisen. Gegebenenfalls können auch Ethylenoxid/ Propylenoxid-Copolymere zur Anwendung gelangen.

Weiterhin bevorzugt sind Farbstoffzubereitungen, die zusätzlich, bezogen auf das Gewicht der Zubereitung, 10 bis 90 Gew.-%, vorzugsweise 10 bis 70 Gew.-%, eines ein- oder mehrwertigen Alkohols oder deren Mischungen enthalten.

Geeignete ein- oder mehrwertige Alkohole sind in der Regel Alkanmono- oder -polyole, insbesondere Polyole, die 2 bis 8 Kohlenstoffatome, vorzugsweise 2 bis 6 Kohlenstoffatome und bis zu 4, vorzugsweise bis zu 3, alkoholische Hydroxygruppen aufweisen. Beispielhaft sind zu nennen Ethan-1,2-diol, Propan-1,2-diol, Propan-1,3-diol, Glycerin, Pentan-1,2,5-triol oder Hexan-1,2,6-triol.

Weitere Bestandteile der erfindungsgemäßen Farbstoffzubereitungen können z.B. Hilfsmittel, wie Konservierungsmittel, Antioxidantien, Schaumverhinderungsmittel oder Mittel zur Regulierung der Viskosität sein. Diese Mittel sind an sich bekannt und handelsüblich. Wenn diese Mittel in den erfindungsgemäßen Farbstoffzubereitungen zugegen sind, beträgt ihre Gesamtmenge in der Regel 1 Gew.-% oder weniger, bezogen auf das Gewicht der Zubereitung.

Weiterhin können in bevorzugten Farbstoffzubereitungen auch Tenside zur Reduzierung zur Oberflächenspannung und zur Verbesserung des Benetzungsverhaltens im Tintenkopf zur Anwendung gelangen.

Bevorzugte Farbstoffzubereitungen enthalten Tenside auf der Basis von ethoxylierten oder propoxylierten Fett- oder Oxoalkoholen, Propylenoxid-Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder Alkindiolen.

Selbstverständlich beträgt die Summe der Bestandteile in den erfindungsgemäßen Farbstoffpräparationen jeweils 100 Gew.-%. Sofern die Summe der Bestandteile der erfindungsgemäßen Farbstoffzubereitungen einen Wert ergibt, der kleiner als 100 Gew.-% ist, ist der restliche Bestandteil in der Regel Wasser.

Die erfindungsgemäßen Farbstoffzubereitungen weisen üblicherweise eine Viskosität von 1 bis 15 $mm^2$/sec, vorzugsweise 2 bis 8 $mm^2$/sec auf.

Die Oberflächenspannung der erfindungsgemäßen Farbstoffzubereitungen beträgt in der Regel 30 bis 70 mN/m, vorzugsweise 30 bis 60 mN/m.

Der pH-Wert der erfindungsgemäßen Farbstoffzubereitungen liegt im allgemeinen bei 2 bis 11, vorzugsweise 6 bis 19.

Die Herstellung der neuen Farbstoffzubereitungen erfolgt auf an sich bekanntem Weg. So kann man den Farbstoff, beispielsweise in Form eines Preßkuchens, zusammen mit dem Dispergiermittel und gegebenenfalls Polyalkylenglykol in Gegenwart von Wasser mischen und in einer geeigneten Apparatur vordispergieren. Die resultierende Mischung kann dann in einer Mühle behandelt werden, um die gewünschte Größe der Farbstoffteilchen einzustellen. Schließlich kann man die Endeinstellung vornehmen, indem man noch entsprechende Mengen Wasser, gegebenenfalls Polyalkylenglykol, ein- oder mehrwertigen Alkohol und/oder Kohlenhydrate und gegebenenfalls weitere Hilfsmittel zusetzt und nach dem Mischen mittels eines Siebs, vorzugsweise mit einer Porengröße von 1 μm, filtriert.

Die erfindungsgemäßen Farbstoffzubereitungen eignen sich in vorteilhafter Weise als Tinten im Ink-Jet-Verfahren sowie für den textilen Sublimations-Transferdruck.

Beim Ink-Jet-Verfahren (Tintenstrahldruck-Verfahren) verwendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Farbstoffzubereitungen als Tinten für das Bubble-Jet-Verfahren oder für das Verfahren mittels eines piezoelektrischen Kristalls.

Geeignete Substrate für das Ink-Jet-Verfahren sind neben Papier auch die im folgenden aufgeführten Trägermaterialien.

Beim textilen Sublimations-Transferdruck wird ein Muster zunächst auf einem Zwischenträger vorgebildet und anschließend durch Hitzeeinwirkung auf einen Träger übertragen. Der Farbstoff kann sowohl beim Transfer selbst als auch in einem anschließenden Fixier- und Nachbehandlungsprozeß fixiert werden. Dieses Verfahren ist allgemein bekannt und z.B. in Ullmann's Encyclopedia of Industrial Chemistry, 5th Edition, Band A26, Seiten 499 bis 501, beschrieben.

Geeignete Träger sind insbesondere textile Materialien, z.B. Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, Polyamid, Polyacrylnitril, Triacetat, Acetat, Polycarbonat, Polypropylen oder Polyvinylchlorid, Polyestermikrofasern oder auch mit Kunststoffen beschichtete Träger, wie Metallfolien, Glas oder Keramik.

Die neuen Farbstoffzubereitungen zeichnen sich dadurch aus, daß sie beim Ink-Jet-Verfahren zu keiner Verstopfung der Düsen führen. Weiterhin erhält man bei ihrer Anwendung streifenfreie Drucke.

Die folgenden Beispiele sollen die Erfindung näher erläutern.

Folgende Farbstoffe kamen zur Anwendung

Farbstoff Nr. 1

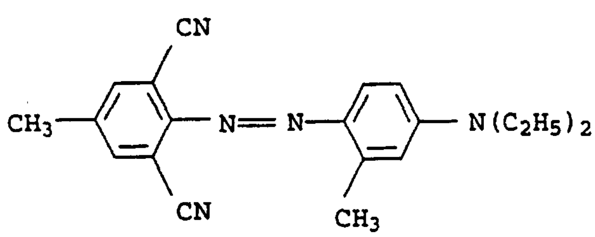

Farbstoff Nr. 2

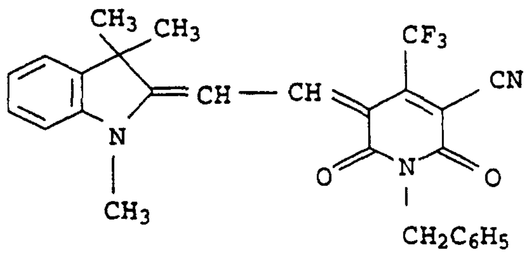

Dispergiermittel:

Als Dispergiermittel auf Basis eines Arylsulfonsäure-Formaldehyd-Kondensationsproduktes kam ein Produkt zur Anwendung, das zusätzlich noch Benzoesäure enthält und in der US-A-5 186 846 als Beispiel 3 beschrieben ist (Dispergiermittel 1).

Als Dispergiermittel kam weiterhin ein wasserlösliches Dispergiermittel auf Basis von oxalkylierten Phenolen zur Anwendung, das in der US-A-4 218 218 als Beispiel 13 beschrieben ist (Dispergiermittel 2).

Herstellung der Farbstoffzubereitung (Vorschrift 1)

15 g Farbstoff, 15 g Polyethylenglykol (mittl. Molekulargewicht: 400), 7,5 g Dispergiermittel, 0,37 g 50 gew.-%ige wäßrige Lösung von Glutardialdehyd und 0,75 g 47 gew.-%ige wäßrige Lösung von Tetramethylolacetylendiharnstoff werden mit Wasser zum Gesamtgewicht von 100 g aufgefüllt und in einer Mühle angeteigt. Danach wird der pH-Wert mit 10 gew.-%iger Natronlauge auf 8,5 gestellt.

Anschließend wird die Mischung in einer Rührwerkskugelmühle gemahlen, so daß 99 % der Farbstoffteilchen eine Größe von kleiner 1 µm besitzen.

Zur Endeinstellung werden 26,7 g Mahlgut mit weiteren 4 g Polyethylenglykol (s.o.), 0,1 g 50 gew.-%ige wäßrige Lösung von Glutardialdehyd, 0,3 g 47 gew.-%ige wäßrige Lösung von Tetramethylolacetylendiharnstoff und 20 g 70 gew.-%iger wäßriger Sorbitlösung versetzt, mit Wasser bis zu einem Gesamtgewicht von 100 g aufgefüllt, gemischt und über ein Sieb mit einer Porengröße von 1 µm filtriert.

Man erhielt die in der folgenden Tabelle 1 aufgeführten Farbstoffzubereitungen. (Die Prozentangaben sind jeweils Gewichtsprozente.)

Tabelle 1

| | Zubereitung Nr. | | |
|---|---|---|---|
| | 1 | 2 | 3 |
| Farbstoff Nr. 1 | 4 % | 4 % | |
| Farbstoff Nr. 2 | | | 4 % |
| Dispergiermittel 1 | 2 % | | 2 % |
| Dispergiermittel 2 | | 2 % | |
| Polyethylenglykol | 8 % | 8 % | 8 % |
| 70 %ige wäßrige Lösung von Sorbit | 20 % | 20 % | 20 % |
| 50 %ige wäßrige Lösung von Glutardialdehyd | 0,2 % | 0,2% | 0.2% |
| 4 %ige wäßrige Lösung von Tetramethylolacetylenharnstoff | 0,5 % | 0,5 % | 0,5 % |
| vollentsalztes Wasser | 65,3 % | 65,3 % | 65,3 % |
| Gesamt | 100 % | 100 % | 100 % |

Die Farbstoffzubereitungen weisen die in der folgenden Tabelle 2 aufgeführten physikalischen und drucktechnischen Eigenschaften auf.

Tabelle 2

| | Zubereitung Nr. | | |
|---|---|---|---|
| | 1 | 2 | 3 |
| Oberflächenspannung [mN/m] | 55,2 | 56,3 | 48,8 |
| Viskosität [$mm^2$/sec] | 4,2 | 4,1 | |
| Teilchengrößenverteilung [µm] X 50 | 220 | 220 | |
| Teilchengrößenverteilung [µm] nach Alterung a) X 50 | 225 | 225 | |
| Tropfengewicht [ng] 10 Millionen Tropfen Minimum/Maximum | 132/141 | 127/138 | 65/68 |
| Dispersionsfaktor | > 99 | > 99 | |

Testmethoden und Bewertungen

1) Oberflächenspannung

Die Oberflächenspannung wurde mit dem Digital-Tensiometer K 10 der Fa. Krüss bestimmt. Die in Tabelle 2 angegebenen Werte sind die Mittelwerte aus 3 Messungen.

2) Viskosität

Die Viskosität wurde nach der Ubbelohde Methode (DIN 51662) bestimmt.

3) Teilchengrößenbestimmung

Die Teilchengrößenverteilung wurde mit einem CILAS Granulometer HR 850 der Fa. Alcatel gemessen.

4) Alterungsstabilität

Die Alterungsstabilität der Zubereitungen (Tinten) wurde wie folgt untersucht:

Es wurde ein Gefrier-/Wämebehandlungszyklus (Einfrieren der Tinten für 4 h bei -20°C und anschließende Wärmebehandlung für 4 h bei 70°C) durchgeführt. Dieser Temperaturzyklus wurde jeweils 4 mal durchlaufen.

Nach dem Alterungstest wurde die Teilchengrößenverteilung der belasteten Tinten mit der CILAS-Methode erneut ermittelt.

5) Kogationstest

Von besonderer Wichtigkeit ist das Verhalten der Tinten während des Druckvorgangs in den Düsen. Die Neigung der Tinten Ablagerungen und Verstopfungen in den Düsen zu bilden, wurde mit nachstehendem Test überprüft.

Als Testgerät wurden ein modifizierter Desk Jet Plus (Bubble Jet-Drucker) der Fa. Hewlett-Packard verwendet.

Zunächst wurde das mittlere Tropfengewicht in Abhängigkeit der, an die Düsen angelegten Spannung ermittelt. Anschließend wurden bei konstanter Spannung 1 Million Impulse an jede Düse gegeben und danach erneut das mittlere Tropfengewicht einer definierten Tropfenanzahl bestimmt. Dieser Vorgang wurde insgesamt 10 mal wiederholt.

Bei idealem Verhalten der Tinten sollte das mittlere Tropfengewicht über den Versuchszeitraum konstant bleiben.

Die Veränderung des Tropfengewichtes der einzelnen Tinten ist in Tabelle 2 angeführt.

6) Disperionsfaktor

100 ml der entsprechenden Tinte wurden für 7 Tage bei Raumtemperatur in einem Meßzylinder gelagert. Anschließend wurden 10 ml der Dispersion vom Boden und 10 ml von der Oberfläche entnommen und jeweils die Farbstärke photometrisch bestimmt.

Der Dispersionsfaktor errechnet sich aus Farbstärke der oberen Dispersion/Farbstärke der unteren Dispersion x 100 = Dispersionsfaktor.

Ähnlich günstige Ergebnisse werden mit den in der folgenden Tabelle 3 aufgeführten Farbstoffen erzielt.

Tabelle 3

| Farbstoff Nr. | |
|---|---|
| 3 | 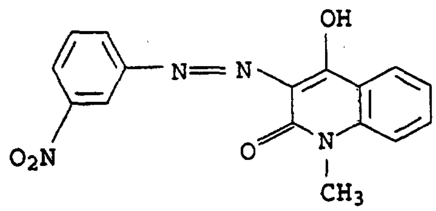 |
| 4 | 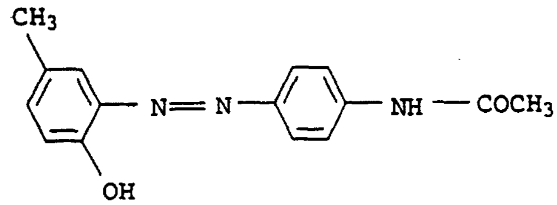 |
| 5 | 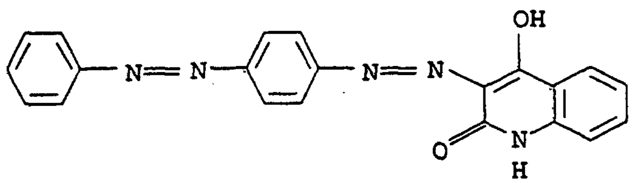 |
| 6 | 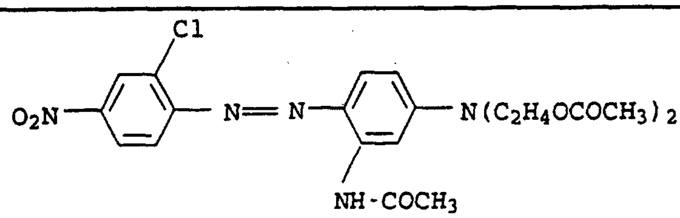 |
| 7 | 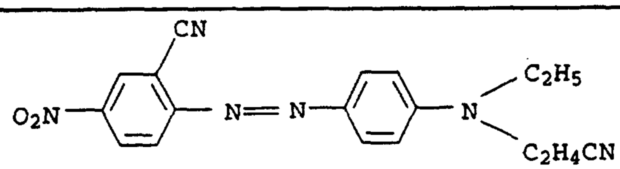 |
| 8 | 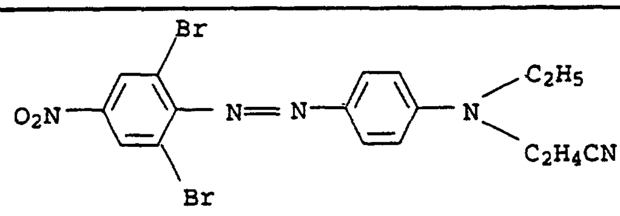 |
| 9 | 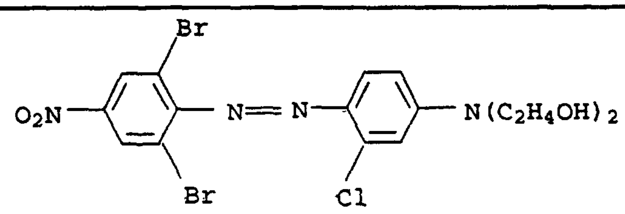 |

| Farbstoff Nr. | |
|---|---|
| 10 | 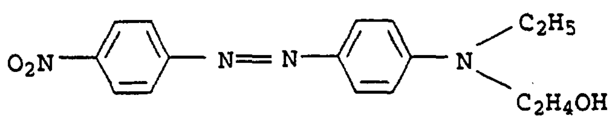 |
| 11 | 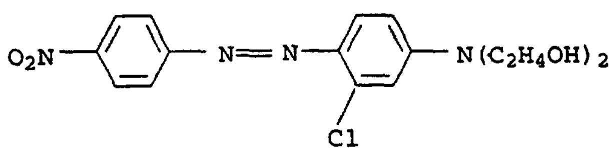 |
| 12 | 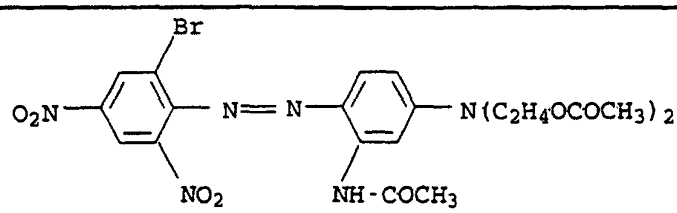 |
| 13 | 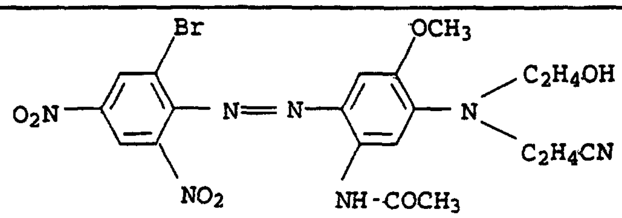 |
| 14 | 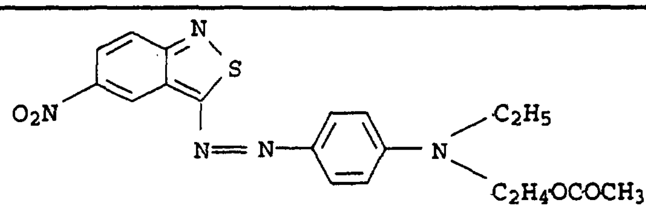 |
| 15 | 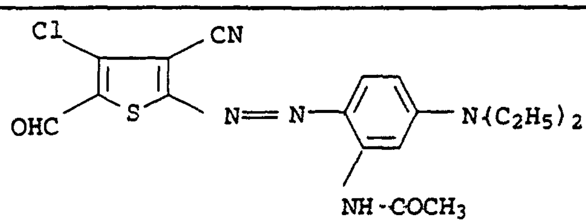 |

## Patentansprüche

1. Farbstoffzubereitungen, enthaltend, jeweils bezogen auf das Gewicht der Zubereitung, 0,1 bis 30 Gew.-% eines oder mehrerer Farbstoffe aus der Klasse der Mono- oder Polyazofarbstoffe, die keine sauren Gruppen aufweisen, 0,1 bis 20 Gew.-% eines Dispergiermittels auf Basis eines Arylsulfonsäure-Formaldehyd-Kondensationsprodukts, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist, oder 0,1 bis 20 Gew.-% eines wasserlöslichen Dispergiermittels auf Basis von oxalkylierten Phenolen und gegebenenfalls Wasser.

2. Farbstoffzubereitungen nach Anspruch 1, **dadurch gekennzeichnet, daß** sie, jeweils bezogen auf das Gewicht der Zubereitung 1 bis 15 Gew.-% eines oder mehrerer Azofarbstoffe und 0,5 bis 10 Gew.-% Dispergiermittel enthalten.

3. Farbstoffzubereitungen nach Anspruch 1, **dadurch gekennzeichnet, daß** sie zusätzlich, jeweils bezogen auf das Gewicht der Zubereitung, 0,1 bis 30 Gew.-% eines Kohlenhydrats und 0,1 bis 20 Gew.-% eines Polyalkylenglykols enthalten.

4. Farbstoffzubereitungen nach Anspruch 1, **dadurch gekennzeichnet, daß** sie zusätzlich, bezogen auf das Gewicht der Zubereitung, 10 bis 90 Gew.-% eines ein- oder mehrwertigen Alkohols oder deren Mischungen enthalten.

5. Farbstoffzubereitungen nach Anspruch 1, **dadurch gekennzeichnet, daß** 99 % der in der Zubereitung enthaltenen Farbstoffteilchen kleiner sind als 1 µm.

6. Farbstoffzubereitungen nach Anspruch 1, **dadurch gekennzeichnet daß** sie Azofarbstoffe enthalten, mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

7. Farbstoffzubereitungen nach Anspruch 1, **dadurch gekennzeichnet, daß** sie Azofarbstoffe enthalten, mit einer Kupplungskomponente aus der Anilin-, Aminonaphthalin-, Aminothiazol-, Diaminopyridin- oder Hydroxypyridonreihe.

8. Verwendung der Farbstoffzubereitungen gemäß Anspruch 1 als Tinten im Ink-Jet-Verfahren.

9. Verwendung der Farbstoffzubereitungen gemäß Anspruch 1 als Tinten im textilen Sublimations-Transferdruck.

## Claims

1. A dye preparation comprising, based in each case on the weight of the preparation, from 0.1 to 30% by weight of one or more dyes from the class of the mono- or polyazo dyes containing no acidic groups, from 0.1 to 20% by weight of a dispersant based on an arylsulfonic acid-formaldehyde condensate, containing from 3 to 50% by weight, based on the weight of the dispersant, of one or more aromatic or long-chain aliphatic carboxylic acids, their salts, their anhydrides, or a mixture thereof, or from 0.1 to 20% by weight of a water-soluble dispersant based on alkoxylated phenols with or without water.

2. A dye preparation as claimed in claim 1, comprising, based in each case on the weight of the preparation, from 1 to 15% by weight of one or more azo dyes and from 0.5 to 10% by weight of dispersant(s).

3. A dye preparation as claimed in claim 1, additionally comprising, based in each case on the weight of the preparation, from 0.1 to 30% by weight of a carbohydrate and from 0.1 to 20% by weight of a polyalkylene glycol.

4. A dye preparation as claimed in claim 1, additionally comprising, based on the weight of the preparation, from 10 to 90% by weight of a mono- or polyhydric alcohol or mixture thereof.

5. A dye preparation as claimed in claim 1, wherein 99% of its dye particles are smaller than 1 µm.

6. A dye preparation as claimed in claim 1, comprising azo dyes having a diazo component which is derived from an aniline or from a five-membered aromatic heterocyclic amine having from one to three heteroatoms selected from the group consisting of nitrogen, oxygen and sulfur in the heterocyclic ring and possibly being fused with a benzene, thiophene, pyridine or pyrimidine ring.

7. A dye preparation as claimed in claim 1, comprising azo dyes having a coupling component from the aniline, aminonaphthalene, aminothiazole, diaminopyridine or hydroxypyridone series.

8. The use of a dye preparation as claimed in claim 1 as an ink in the inkjet process.

9. The use of a dye preparation as claimed in claim 1 as an ink in textile sublimation transfer printing.

**Revendications**

1. Préparations colorantes contenant, dans tous les cas par rapport au poids de la préparation, de 0,1 à 30 % en poids d'un ou plusieurs colorants choisis dans l'ensemble des colorants mono- ou polyazoïques ne comportant pas de groupes acides, de 0,1 à 20 % en poids d'un dispersant à base d'un produit de condensation acide arylsulfonique/formaldéhyde, qui contient de 3 à 50 % en poids, par rapport au poids du dispersant, d'un ou plusieurs acides carboxyliques aromatiques ou aliphatiques à longue chaîne, leurs sels, leurs anhydrides ou un de leurs mélanges, ou encore de 0,1 à 20 % en poids d'un dispersant soluble dans l'eau à base de phénols alcoxylés, et éventuellement de l'eau.

2. Préparations colorantes selon la revendication 1, **caractérisées en ce que**, dans chaque cas par rapport au poids de la préparation, elles contiennent de 1 à 15 % en poids d'un ou plusieurs colorants azoïques et de 0,5 à 10 % en poids d'un dispersant.

3. Préparations colorantes selon la revendication 1, **caractérisées en ce qu'**elles contiennent en outre, dans tous les cas par rapport au poids de la préparation, de 0,1 à 30 % en poids d'un hydrate de carbone et de 0,1 à 20 % en poids d'un polyalkylèneglycol.

4. Compositions colorantes selon la revendication 1, **caractérisées en ce qu'**elles contiennent en outre, par rapport au poids de la préparation, de 10 à 90 % en poids d'un mono- ou polyalcool, ou de leurs mélanges.

5. Préparations colorantes selon la revendication 1, **caractérisées en ce que** 99 % des particules de colorants contenues dans la préparation ont une granulométrie inférieure à 1 µm.

6. Préparations colorantes selon la revendication 1, **caractérisées en ce qu'**elles contiennent des colorants azoïques, avec un composant de diazotation qui dérive d'une aniline ou d'une amine hétérocyclique aromatique à cinq chaînons, laquelle comporte dans le noyau hétérocyclique 1 à 3 hétéroatomes choisi dans l'ensemble comprenant l'azote, l'oxygène et le soufre, et qui peut être condensée par un noyau benzène, thiophène, pyridine ou pyrimidine.

7. Préparations colorantes selon la revendication 1, **caractérisées en ce qu'**elles contiennent des colorants azoïques comportant un composant de copulation choisi dans la série des anilines, des aminonaphtalènes, des aminothiazoles, des diaminopyridines ou des hydroxypyridones.

8. Utilisation des préparations colorantes selon la revendication 1 en tant qu'encres dans le procédé au jet d'encre.

9. Utilisation des préparations colorantes selon la revendication 1 en tant qu'encres dans l'impression sur textiles par transfert par sublimation.